# EUROPÄISCHE PATENTSCHRIFT

(11) **EP 3 104 956 B1**
(45) Veröffentlichungstag und Bekanntmachung des Hinweises auf die Patenterteilung: **25.04.2018**
(21) Anmeldenummer: 15741793.2
(22) Anmeldetag: 24.03.2015
(51) Int. Cl.: B01D 53/14, B01D 53/18, F23J 15/04

(54) **ABSCHEIDEVORRICHTUNG FÜR UND VERFAHREN ZUR ABSCHEIDUNG VON KOHLENDIOXID AUS EINEM GASSTROM, INSBESONDERE AUS EINEM RAUCHGASSTROM, UMFASSEND EINEN KÜHLWASSERKREISLAUF**
DEVICE AND METHOD FOR SEPARATING CARBON DIOXIDE FROM A GAS STREAM, IN PARTICULAR FROM A FLUE GAS STREAM, COMPRISING A COOLING WATER SYSTEM
DISPOSITIF ET PROCÉDÉ DE SÉPARATION DU DIOXYDE DE CARBONE D'UN FLUX DE GAZ, EN PARTICULIER D'UN FLUX DE GAZ DE COMBUSTION, COMPRENANT UN CIRCUIT D'EAU DE REFROIDISSEMENT

(30) Priorität: 07.04.2014 DE 102014206630
(43) Veröffentlichungstag der Anmeldung: 21.12.2016
(73) Patentinhaber: Siemens Aktiengesellschaft, 80333 München (DE)
(72) Erfinder: HÄFNER, Benjamin, 63505 Langenselbold (DE); REICHL, Albert, 65812 Bad Soden (DE); ROGALINSKI, Tim, 65779 Kelkheim (DE); SCHRAMM, Henning, 65719 Hofheim am Taunus (DE); WEBER, Jörg, 63329 Egelsbach (DE)
(86) Internationale Anmeldenummer: PCT/EP2015/056239
(87) Internationale Veröffentlichungsnummer: WO 2015/154988

(56) Entgegenhaltungen:
- EP-A1- 1 552 874
- FR-A1- 2 996 145
- US-A1- 2012 060 689
- US-A1- 2012 318 141
- US-A1- 2013 327 025

## Beschreibung

Die Erfindung betrifft eine Abscheidevorrichtung für Kohlendioxid aus einem Gasstrom, insbesondere aus einem Rauchgasstrom. Des Weiteren betrifft die Erfindung ein Verfahren zur Abscheidung von Kohlendioxid aus einem Gasstrom, insbesondere aus einem Rauchgasstrom.

Vor dem Hintergrund der klimatischen Veränderungen ist es ein globales Ziel, die Emission von Schadstoffen in die Atmosphäre zu verringern. Dies gilt insbesondere für die Emission von Kohlendioxid (CO₂), welches sich in der Atmosphäre ansammelt, die Wärmeabstrahlung der Erde behindert und so als Treibhauseffekt zu einer Erhöhung der Erdoberflächentemperatur führt.

Besonders bei fossilbefeuerten Kraftwerksanlagen zur Erzeugung elektrischer Energie oder Wärme entsteht durch die Verbrennung eines fossilen Brennstoffes ein kohlendioxidhaltiges Gas bzw. Rauchgas. Zur Vermeidung bzw. zur Verringerung von Kohlendioxid-Emissionen in die Atmosphäre muss das Kohlendioxid aus dem Rauchgas abgetrennt werden. Entsprechend werden insbesondere bei bestehenden fossilbefeuerten Kraftwerken geeignete Maßnahmen diskutiert, um nach der Verbrennung das entstandene Kohlendioxid aus dem Rauchgas abzutrennen (Post-Combustion-Capture).

Als eine technische Realisierung wird hierzu das im Rauchgas enthaltene Kohlendioxid in einer Abscheidevorrichtung durch einen Absorptions-Desorptions-Prozess mittels eines geeigneten Waschmediums bzw. eines Absorptionsmediums aus dem jeweiligen Rauchgasstrom herausgewaschen. Bei einem solchen Prozess ist eine Kühlung der in der Abscheidevorrichtung eingesetzten Vorrichtungskomponenten bzw. der entsprechenden Fluidströme notwendig. So bedarf es beispielsweise einer Kühlung des Gasstroms vor dem Eintritt in den Absorber der Abscheidevorrichtung, einer Kühlung des zur Absorption von Kohlendioxid eingesetzten Waschmediums, ebenso wie der Kühlung des kohlendioxidreichen Gasaustrittsstroms am Kopf des Desorbers.

Häufig werden hierzu flüssigkeitsgekühlte Kühleinheiten, und insbesondere wassergekühlte Kühleinheiten eingesetzt. Allerdings gestaltet sich eine Wasserkühlung insbesondere an Standorten, an denen kein oder nur geringe Mengen an Wasser verfügbar sind, problematisch. Der Einsatz von wassergekühlten Kühleinheiten ist hier nicht wirtschaftlich, da eine Anlieferung von Wasser zu den gewünschten Standorten mit einem hohen Aufwand und daraus resultierend mit entsprechend hohen Kosten verbunden ist.

Der Erfindung liegt es als eine erste Aufgabe zugrunde, für eine Abscheidevorrichtung für Kohlendioxid eine möglichst kostengünstige und verfahrens- sowie vorrichtungstechnisch möglichst einfach umsetzbare Möglichkeit zur Kühlung der eingesetzten Vorrichtungskomponenten anzugeben.

Als eine zweite Aufgabe liegt der Erfindung zugrunde, ein Verfahren zur Abscheidung von Kohlendioxid anzugeben, wobei die notwendige Kühlung der Fluidströme möglichst kostengünstig und effizient ist.

Die erste Aufgabe der Erfindung wird erfindungsgemäß gelöst durch eine Abscheidevorrichtung für Kohlendioxid aus einem Gasstrom gemäß Anspruch 1. In einem ersten Schritt geht die Erfindung von der Tatsache aus, dass an Standorten ohne einen Zugang zu Wasser statt der gängigen wassergekühlten Kühleinheiten üblicherweise auf luftgekühlte Kühleinheiten zurückgegriffen wird. Bei solchen Luftkühlern sind jedoch aufgrund des hohen gasseitigen Wärmetransportwiderstands große Kühlflächen und leistungsstarke Gebläse notwendig, so dass Luftkühler einen entsprechen großen Platzbedarf haben und hohe Lärmemissionen sowie hohe Investitions- und Betriebskosten verursachen. In Ermangelung von Alternativen werden die vorbeschriebenen Nachteile jedoch in Kauf genommen werden.

In einem zweiten Schritt berücksichtigt die Erfindung die Tatsache, dass im Rauchgas von fossil befeuerten Kraftwerken aufgrund der im Brennstoff enthaltenen wasserstoffhaltigen Verbindungen unter anderem Wasser als Verbrennungsprodukt enthalten ist. Da das Rauchgas vor dem Eintritt in eine Abscheidevorrichtung, bzw. den entsprechenden Absorber gekühlt werden muss, kondensiert im Rauchgas enthaltenes Wasser in einem dem Absorber vorgeschalteten Gaskühler aus. Um die Menge des zur Kühlung des Rauchgases eingesetzten Kühlmittels trotz des anfallenden Kondensats konstant zu halten, muss ein entsprechender Teilstrom im Betrieb aus dem Gaskühler entnommen werden. Dieser Teilstrom wird üblicherweise ungenutzt als Abwasser verworfen.

Unter Berücksichtigung des Vorbeschriebenen erkennt die Erfindung in einem dritten Schritt überraschenderweise, dass der dem Gaskühler entnommene Teilstrom - anstatt verworfen zu werden - gezielt als Kühlwasser genutzt werden kann. Dies kann durch eine dem Gaskühler nachgeschaltete Aufbereitungseinheit erreicht werden, mittels derer überschüssiges Wasser aus dem Gaskühler gezielt gereinigt werden kann.

Ein dem Gaskühler entnommener Teilstrom an Wasser kann der Aufbereitungseinheit zugeführt, in dieser gereinigt und anschließend zur Kühlung von Vorrichtungskomponenten und/oder Fluidströmen im Rahmen eines Abscheideprozesses für Kohlendioxid genutzt werden. Alternativ kann das in der Aufbereitungseinheit gereinigte Wasser im Hinblick auf eine spätere Verwendung gelagert werden. Mit anderen Worten lässt sich durch die Entnahme und die anschließende Reinigung von bislang verworfenem Abwasser Kühlwasser vor Ort generieren und dieses gezielt nutzen.

Insbesondere kann das gereinigte Wasser zur korrosionsfreien Sprühkühlung (Spraycooling) von bereits eingesetzten Luftkühlern verwendet werden. Hierbei wird das gereinigte Wasser nahezu rückstandsfrei verdunstet. Durch Entzug der Verdampfungsenthalpie wird der Luftstrom gekühlt und der Wärmeübergang verbessert. Dadurch kann ein Luftkühler einerseits kleiner dimensioniert werden und andererseits können prozessseitig niedrigere Temperaturen erreicht werden.

Insgesamt trägt die gezielte Gewinnung, Reinigung und mögliche Speicherung der Abgaskomponente Wasser und deren anschließende Nutzung zur effizienteren Kühlung des Abscheideprozesses für Kohlendioxid aus Gasströmen bei. Aufgrund dessen lassen sich bei eingesetzten Luftkühlern neben einer Einsparung von Investitions- und Betriebskosten gleichzeitig eine Verringerung der benötigten Aufstellungsfläche und der Lärmemissionen verwirklichen. Zusätzlich ermöglicht eine gezielte Generierung von Kühlwasser vor Ort den Einsatz von wassergekühlten Kühleinheiten auch an Standorten ohne direkten Wasserzugang.

Die dem Gaskühler nachgeschaltete Aufbereitungseinheit kann beispielsweise auf der Kondensatseite strömungstechnisch mit diesem verbunden sein, so dass das zu reinigende Wasser aus dem Kühler der Aufbereitungseinheit unmittelbar zugeführt werden kann. Alternativ ist auch der Einsatz einer nicht unmittelbar angeschlossenen Aufbereitungseinheit möglich, zu der das zu reinigende Wasser erst transportiert und dort entsprechend aufgereinigt wird.

Als Gaskühler ist vorzugsweise ein gängiger Rauchgaskühler, ein sogenannter Flue-Gas-Kühler, eingesetzt. Die Reinigung des dem Gaskühler entnommenen Wassers und die Möglichkeit der anschließenden - mittelbaren oder unmittelbaren - Weiterverwendung macht ebenfalls den Einsatz von wassergekühlten Kühleinheiten möglich, die bislang im Falle von Wassermangel an den Standorten der jeweiligen Abscheidevorrichtung nicht oder nur bedingt möglich waren.

In einer vorteilhaften Ausgestaltung der Erfindung ist die Aufbereitungseinheit über eine Zuführleitung strömungstechnisch mit der Kondensatseite des Gaskühlers verbunden. Die Zuführleitung kann hierbei unmittelbar mit dem Gaskühler verbunden sein und ermöglicht die Zufuhr zumindest eines Teilstroms des im Gaskühler anfallenden Wassers zur Aufbereitungseinheit. Die Entnahme des anfallenden Wassers aus dem Gaskühler erfolgt hierbei zweckmäßigerweise kontinuierlich, um die Menge an zur Kühlung des Gasstromes benötigtem Wasser innerhalb des Gaskühlers im Betrieb konstant zu halten. Das als Kondensat aus dem Rauchgas anfallende Wasser mischt sich bei einem typischen Flue-Gas-Kühler nämlich mit dem zur Kühlung des Gasstroms eingesetzten Wasser. Die Menge des entnommenen Wassers ist hierbei insbesondere abhängig von der Menge an durch die Kühlung aus dem Gasstrom bzw. dem Rauchgas auskondensiertem Wasser. Mit anderen Worten ist die abgezogene Menge des Wassers im Wesentlichen proportional zur Menge an aus dem Rauchgas auskondensiertem Wasser.

In einer bevorzugten Variante ist der Gaskühler in einen Kühlmittelkreislauf geschaltet, der über die Zuführleitung strömungstechnisch mit der Aufbereitungseinheit verbunden ist. Der Kühlmittelkreislauf umfasst zweckmäßigerweise eine Warmwasserleitung, eine Kaltwasserleitung, sowie eine zwischen beiden Leitungen angeordnete Kühleinheit. Die Zuführleitung ist vorzugsweise der Warmwasserleitung des Kühlmittelkreislaufes angeschlossen. Das im Gaskühler erhitzte Kühlwasser wird über die Warmwasserleitung insbesondere mit dem Kondensat aus dem Gaskühler abgeführt. Über die Zuführleitung wird ein Teilstrom des aus dem Gaskühler ausströmenden Wassers der Aufbereitungseinheit zugeführt und dort entsprechend gereinigt. Das restliche Wasser, der Hauptstrom, wird der Kühleinheit zugeführt, dort abgekühlt und über die Kaltwasserleitung wieder dem Gaskühler zur erneuten Kühlung eines einströmenden Gasstromes zugeführt.

Um die gewünschte Reinigung des der Aufbereitungseinheit zugeführten Abwassers zu ermöglichen, umfasst die Aufbereitungseinheit vorzugsweise eine Umkehrosmoseanlage. Hierbei wird das Abwasser durch eine synthetische semipermeable Membran gepresst, die das Wasser durchlässt, die enthaltenen Unreinheiten jedoch nicht. Auf der einen Seite der Membran sammelt sich das gereinigte Wasser, welches dann einer Nutzung und/oder einer Lagerung zugeführt werden kann. Die auf der anderen Seite der Membran abgetrennten Verunreinigungen können als Abfallstrom verworfen werden.

Das in der Aufbereitungseinheit insbesondere mittels der Umkehrosmoseanlage gereinigte Wasser kann anschließend einer temporären Lagerung zugeführt und nach Bedarf genutzt werden. Hierzu umfasst die Aufbereitungseinheit in einer vorteilhaften Ausgestaltung einen Vorratstank. Der Vorratstank kann beispielsweise der Umkehrosmoseanlage strömungstechnisch angeschlossen sein. Alternativ ist der Einsatz eines separaten getrennten Vorratstanks möglich, zu welchem das gereinigte Wasser ausgehend von der Aufbereitungseinheit transportiert wird.

Eine Lagerung bzw. Bevorratung des gereinigten Wassers ist insbesondere dann von Vorteil, wenn die in einer Abscheidevorrichtung eingesetzten Kühleinheiten als Luftkühler ausgebildet sind. So kann insbesondere bei niedrigen Außentemperaturen und abhängig von der Jahres- und/oder Tageszeit das gereinigte Wasser gespeichert werden und die Abscheidevorrichtung mit reiner Luftkühlung betrieben werden. Bei höheren Außentemperaturen, wenn eine reine Luftkühlung nicht mehr ausreicht, kann das gespeicherte Wasser für ein Spraycooling-Verfahren der Luftkühler eingesetzt werden. Das im Vorratstank gespeicherte Wasser ist hierbei grundsätzlich zur Kühlung für alle in der Abscheidevorrichtung eingesetzten Kühleinheiten verwendbar.

Alternativ oder zusätzlich zu einer temporären Lagerung des gereinigten Wassers innerhalb eines Vorratstankes ist auch die unmittelbare Verwendung des Wassers nach dessen Reinigung in der Aufbereitungseinheit möglich.

In einer vorteilhaften Ausgestaltung ist die Aufbereitungseinheit zur Abfuhr von gereinigtem Wasser an den Gaskühler ausgebildet. Zweckmäßigerweise ist hierbei eine der Aufbereitungseinheit angeschlossene Abführleitung dem Gaskühler angeschlossen. Das in der Aufbereitungseinheit gereinigte Wasser kann so als Kühlmittel unmittelbar dem Gaskühler zugeführt werden und dort zur Kühlung des Rauchgases und der damit verbundenen weiteren Kondensation von Wasser genutzt werden.

In einer weiter vorteilhaften Ausgestaltung ist die Aufbereitungseinheit zur Abfuhr von gereinigtem Wasser an den Kühlmittelkreislauf des Gaskühlers ausgebildet. Zweckmäßigerweise umfasst die Aufbereitungseinheit hierzu eine Abführleitung, die mit dem Kühlmittelkreislauf verbunden ist. Das gereinigte Wasser kann alternativ auch einer in den Kühlmittelkreislauf geschalteten Kühleinheit zugeführt werden und dort im Wärmetauscher zur Kühlung des aus dem Gaskühler entnommenen, durch die Kühlung des Rauchgases erwärmten Kühlwassers genutzt werden.

Zweckmäßigerweise ist als Gaskühler ein Direktkontakt-Kühler eingesetzt. In einem Direktkontakt-Kühler (direct contact cooler) wird das zu kühlende Gemisch, vorliegend ein Gasstrom bzw. ein Rauchgasstrom, in direktem Wärmeaustausch durch ein Kühlmittel wie Kaltwasser geführt und dadurch abgekühlt. Ein Direktkontakt-Kühler weist üblicherweise Einbauten in Form von Stoffaustauschelementen wie Siebböden, Füllkörper oder Packungen auf.

Um das im Rauchgas vorhandene Kohlendioxid abzutrennen, wird das im Gaskühler abgekühlte Rauchgas dem Absorber der Abscheidevorrichtung zugeführt. Durch den Kontakt mit im Absorber vorhandenem Waschmedium wird das im Rauchgas enthaltene Kohlendioxid absorbiert. Das mit Kohlendioxid beladene Waschmedium strömt dann in den Desorber, wo es durch thermische Desorption aus dem Waschmedium freigesetzt wird. Hierzu ist der Absorber zweckmäßigerweise über eine Abführleitung strömungstechnisch mit einer Zuführleitung des Desorbers verbunden. Das im Desorber regenerierte Waschmedium wird anschließend zur erneuten Absorption von Kohlendioxid aus dem Rauchgas wieder in den Absorber zurückgeführt, wozu eine Abführleitung des Desorbers mit einer Zuführleitung des Absorbers verbunden ist.

Da das vom Desorber dem Absorber zugeführte Waschmedium vor dem Eintritt in den Absorber auf die für die Absorption des Kohlendioxids benötigte niedrige Temperatur gekühlt werden muss, ist es weiter von Vorteil, wenn in die Zuführleitung des Absorbers eine strömungstechnisch mit der Aufbereitungseinheit verbundene Kühleinheit zur Kühlung des dem Absorber zugeführten Waschmediums geschaltet ist. Zweckmäßigerweise umfasst die Aufbereitungseinheit hierzu eine Abführleitung, die strömungstechnisch mit der Kühleinheit verbunden ist. Die Kühleinheit dient der Kühlung des aus dem Desorber austretenden regenerierten Waschmediums vor dem Eintritt in den Desorber. Durch die strömungstechnische Verbindung einer Abführleitung der Aufbereitungseinheit mit der Kühleinheit kann hierzu das in der Aufbereitungseinheit gereinigte Wasser verwendet werden.

Auch der dem Desorber entnommene kohlendioxidreiche Gasaustrittstrom muss vor einer weiteren Verwendung oder eventuelle Lagerung gekühlt werden. In einer weiter vorteilhaften Ausgestaltung der Erfindung umfasst der Desorber eine Abführleitung für einen Gasaustrittsstrom, in die eine strömungstechnisch mit der Aufbereitungseinheit verbundene Kühleinheit geschaltet ist. Hierbei ist es zweckmäßig, wenn die Aufbereitungseinheit eine Abführleitung umfasst, die mit der Kühleinheit verbunden ist. Der Gasaustrittstrom am Desorberkopf umfasst im Wesentlichen aus dem Waschmedium freigesetztes Kohlendioxid. Auch hier kann aufgrund der strömungstechnischen Verbindung einer Abführleitung der Aufbereitungseinheit mit der Abführleitung das in der Aufbereitungseinheit gereinigte Wasser zur Kühlung eingesetzt werden.

Insgesamt kann das gereinigte überschüssige Wasser zur Kühlung aller innerhalb der Abscheidevorrichtung eingesetzten Kühleinheiten genutzt werden. Die Kühleinheiten, insbesondere in der Zuführleitung des Absorbers, in der Abführleitung des Desorbers und im Kühlmittelkreislauf des Gaskühlers, können entweder luftgekühlt oder wassergekühlt sein. Unabhängig von der Art der Kühleinheit kann das gereinigte Wasser entweder ausgehend von der Aufbereitungseinheit der Kühleinheit zugeführt werden oder vorab bis zum Zeitpunkt der gewünschten Verwendung in dem Vorratstank gelagert werden.

Hierbei ist eine optionale Kühlung einzelner Prozessschritte bzw. einzelner Vorrichtungskomponenten genauso möglich, wie eine gemeinsame Kühlung mehrerer oder aller vorbeschriebenen Prozesse und/oder Vorrichtungskomponenten.

Weiter von Vorteil ist es, wenn dem Desorber über eine Abführleitung ein Druckbehälter zur Zufuhr von im Desorber von Kohlendioxid gereinigtem Waschmedium angeschlossen ist. Der Druckbehälter ist vorzugsweise für einen sogenannten Lean-Solvent-Flash ausgebildet. Innerhalb des Druckbehälters wird dabei der Druck abgesenkt, so dass sich das einströmende Waschmedium entspannt und ein Teil unter Bildung einer Gasphase und einer Flüssigphase verdampft.

Vorzugsweise ist der Druckbehälter über eine als Dampfleitung ausgebildete Abführleitung strömungstechnisch mit dem Desorber verbunden. Über die Abführleitung wird das im Druckbehälter entstehende gasförmige Waschmedium als ein erster Teilstrom dem Desorber zugeführt. Durch die anschließende Kondensation des dampfförmigen Waschmediums innerhalb des Desorbers kann zur Desorption des Kohlendioxids aus dem Waschmedium benötigte Wärme gewonnen werden.

Weiter vorteilhaft ist eine weitere Abführleitung des Druckbehälters mit einer Zuführleitung des Absorbers verbunden. So kann das flüssige Waschmedium als ein zweiter Teilstrom aus dem Druckbehälter in den Absorber zurückgeführt werden. Durch die vorhergegangene Abtrennung der Gasphase als ersten Teilstrom ist das Waschmedium nach dem Passieren des Druckbehälters nahezu vollständig von absorbiertem Kohlendioxid befreit.

In einer weiter bevorzugten Ausgestaltung ist der Abführleitung des Absorbers eine Abzweigleitung zur Entnahme eines ersten Teilstroms des beladenen Waschmediums angeschlossen, die strömungstechnisch mit einer Zuführleitung des Desorbers verbunden ist. So kann das aus dem Absorber entnommene Waschmedium in zumindest zwei Teilströme aufgeteilt werden. Dieses Verfahren ist als Split-Feed-Verfahren bekannt.

Zweckmäßigerweise ist dem Desorber ein Reboiler angeschlossen. Der Reboiler liefert als ein sogenannter Sumpfverdampfer die notwendige Regenerationswärme für die Trennung von absorbiertem CO₂ vom Waschmedium. Das beladene Waschmedium wird hierbei durch Dampf, welcher im Reboiler erzeugt wird, regeneriert. Zur Erzeugung des Dampfes innerhalb des Reboilers wird dieser üblicherweise mit importiertem Dampf, beispielsweise aus einem angeschlossenen Dampfkraftwerk, beheizt.

Vorzugsweise wird als Absorptionsmedium eine Aminosäuresalzlösung eingesetzt. Eine wässrige Aminosäuresalzlösung ist hierbei zweckmäßig. Aminosäuresalze eigenen sich insbesondere aufgrund ihres kaum merklichen Dampfdrucks, der einen Austrag in die Atmosphäre verhindert. Ein bevorzugtes Aminosäuresalz ist ein Salz eines Metalls, insbesondere eines Alkalimetalls. Auch können Mischungen verschiedener Aminosäuresalze als Aktivkomponente des Absorptionsmediums eingesetzt werden.

Die zweite Aufgabe der Erfindung wird erfindungsgemäß gelöst durch ein Verfahren zur Abscheidung von Kohlendioxid aus einem Gasstrom gemäß Anspruch 12. Mittels eines solchen Verfahrens lässt sich bislang ungenutzt verworfenes Abwasser eines zur Kühlung von Gasströmen eingesetzten Gaskühlers aufreinigen und anschließend gezielt zur effizienten Kühlung von im Abscheideprozess für Kohlendioxid eingesetzten Fluidströmen und/oder Vorrichtungskomponenten nutzen.

Der eingesetzte Gaskühler wird vorzugsweise mit Wasser als Kühlmittel betrieben. Durch das zusätzlich aus dem Rauchgasstrom auskondensierte Wasser entsteht ein Überschuss an Wasser. Das überschüssige Wasser wird von dem zur Kühlung benötigten Wasser abgetrennt und einer Aufbereitungseinheit zugeführt. Innerhalb dieser Aufbereitungseinheit erfolgt die Reinigung des Wassers, wodurch dessen Verwendung als Kühlwasser im Rahmen des Abscheideprozesses möglich wird.

Hierbei wird das gereinigte Wasser, welches je nach Bedarf vor der Verwendung gespeichert werden kann, vorzugsweise für eine Sprühkühlung von als Luftkühlern eingesetzten Kühleinheiten genutzt. Ebenso ist grundsätzlich eine Nutzung des gereinigten Wasser in wassergekühlten Kühleinheiten möglich. Weitere vorteilhafte Ausführungsvarianten für das Verfahren ergeben sich aus den auf das Verfahren gerichteten Unteransprüchen. Die für die Abscheidevorrichtung und deren vorteilhafte Weiterbildungen genannten Vorteile können sinngemäß auf das Verfahren und dessen Weiterbildungen übertragen werden.

Im Folgenden wird ein Ausführungsbeispiel der Erfindung anhand einer Zeichnung näher erläutert.

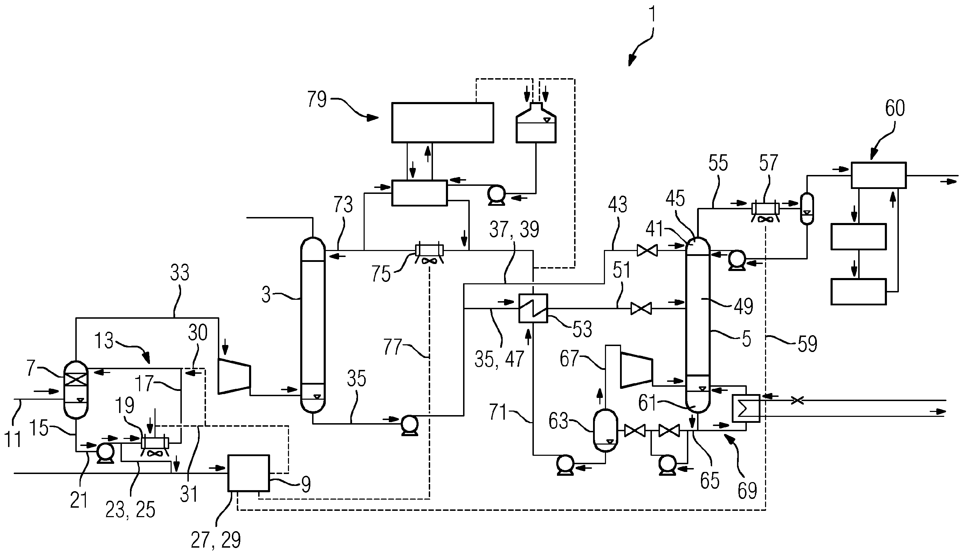

FIG 1 zeigt eine Abscheidevorrichtung 1 für Kohlendioxid aus einem Rauchgasstrom. Die Abscheidevorrichtung 1 umfasst einen Absorber 3 und einen strömungstechnisch mit dem Absorber 3 verbundenen Desorber 5. Dem Absorber 3 ist ein als Rauchgaskühler ausgebildeter Gaskühler 7 strömungstechnisch vorgeschaltet, dem eine Aufbereitungseinheit 9 für Wasser zugeordnet ist.

Um Rauchgas, welches beispielsweise als Verbrennungsabgas bei der Verbrennung von fossilen Brennstoffen in Kraftwerken anfällt, zu reinigen und insbesondere das im Rauchgas enthaltene Kohlendioxid aus diesem abzutrennen, wird ein Rauchgasstrom über eine Rauchgasleitung 11 zunächst der Abscheidevorrichtung 1 zugeführt. Das Rauchgas strömt über die Rauchgasleitung 11 in den Rauchgaskühler 7, der als ein Direktkontaktkühler ausgebildet ist und mit Wasser als Kühlmittel betrieben wird. In dem Rauchgaskühler 7 wird das Rauchgas abgekühlt, bevor es dem Absorber 3 der Abscheidevorrichtung 1 zugeführt wird.

Der Rauchgaskühler 7 selbst ist in einen Kühlmittelkreislauf 13 geschaltet, der eine Warmwasserleitung 15, eine Kaltwasserleitung 17 und eine zwischen beide Leitungen 15, 17 geschaltete, als Luftkühler ausgebildete Kühleinheit 19 umfasst. Über die Warmwasserleitung 15 wird das bei der Kühlung des Rauchgases erhitzte Wasser aus dem Rauchgaskühler 7 abgeführt, in der Kühleinheit 19 abgekühlt und zur erneuten Kühlung des Rauchgasstromes über die Kaltwasserleitung 17 wieder dem Rauchgaskühler 7 zugeführt.

Da im Rauchgas neben Kohlendioxid als Verbrennungsprodukt auch Wasser enthalten ist, kondensiert dieses bei der Kühlung des Rauchgases im Rauchgaskühler 7 aus und mischt sich dem Kühlwasserstrom bei. Um die zur Kühlung des Rauchgases benötigte Wassermenge innerhalb des Kühlmittelkreislaufes 13 konstant zu halten, wird dem Rauchgaskühler 7 deshalb vorliegend kontinuierlich überschüssiges Wasser aus dem den Gaskühler 7 über die Warmwasserleitung 15 verlassenden Wasserstrom 21 entzogen, wozu ein Teilstrom 23 entnommen wird.

Anstatt den überschüssigen Teil des Wassers wie bislang üblich zu verwerfen, wird der Teilstrom 23 des Wassers vom Rauchgaskühler 7 über eine Zuführleitung 25 der Aufbereitungseinheit 9 zugeführt. In der Aufbereitungseinheit 9 erfolgt die Reinigung des abgezogenen Wassers mittels einer Umkehrosmose in einer entsprechenden Umkehrosmoseanlage 27. Das gereinigte Wasser wird dann innerhalb eines Vorratstankes 29, der Teil der Aufbereitungseinheit 9 ist, gespeichert.

Das im Vorratstank 29 gespeicherte Wasser kann nun je nach Bedarf zur Kühlung von in der Abscheidevorrichtung 1 eingesetzten Vorrichtungskomponenten und/oder Fluidströmen eingesetzt werden. Vorliegend wird das Wasser aus dem Vorratstank 29 insbesondere zur Kühlung des Luftkühlers 19 im Kühlmittelkreislauf 13 in Form einer Sprühkühlung eingesetzt, was durch die unterbrochene Linie 31 verdeutlicht ist. Mit anderen Worten ist der Vorratstank 29 bzw. die Aufbereitungseinheit 9 dem Luftkühler 19 zur Zuführung von Wasser zwecks Kühlung angeschlossen. Alternativ kann das Wasser auch anderweitig aus dem Vorratstank 29 zum Luftkühler 19 transportiert werden. Die Aufbereitungseinheit 9 kann auch zur Abfuhr des gereinigten Wassers an den Kühlmittelkreislauf 13 und/oder an den Gaskühler 7 ausgebildet sein. Dies ist in FIG 1 durch eine entsprechende Abführleitung 30 dargestellt.

Um die gewünschte Abtrennung von Kohlendioxid aus dem Rauchgas zu gewährleisten, strömt das im Rauchgaskühler 7 gekühlte Rauchgas über eine Zuführleitung 33 in den Absorber 3 der Abscheidevorrichtung 1. Hier wird es mit einem Waschmedium, einem kaliumhaltigen Aminosäuresalz, in Kontakt gebracht, in dem das im Rauchgas enthaltene Kohlendioxid absorbiert wird. Das mit Kohlendioxid beladene Waschmedium wird vom Absorber 3 dem Desorber 5 zugeführt. Hierzu wird das beladene Waschmedium dem Absorber 3 über die Abführleitung 35 entnommen.

Ein erster Teilstrom 37 wird über eine der Abführleitung 35 des Absorbers 3 angeschlossene Abzweigleitung 39 in eine erste Desorberstufe 41 des dem Absorber 3 nachgeschalteten Desorber 5 geführt, wozu die Abzweigleitung 39 strömungstechnisch mit einer Zuführleitung 43 des Desorbers 5 verbunden ist. Der erste Teilstrom 37 wird der ersten Desorberstufe 41 ohne eine Vorwärmung am Kopf 45 des Desorbers 5 zugeführt.

Ein zweiter Teilstrom 47 wird einer zweiten Desorberstufe 49 des Desorbers 5 über eine strömungstechnische Verbindung der Abführleitung 35 mit einer weiteren Zuführleitung 51 des Desorbers 5 zugeführt. Hierbei passiert der zweite Teilstrom 47 zuerst den Wärmetauscher 53 und wird durch das aus dem Desorber 5 zurückgeführte regenerierte Waschmedium vorgewärmt.

Innerhalb des Desorbers 5 wird das im Waschmedium absorbierte Kohlendioxid freigesetzt und am Kopf 45 des Desorbers 5 über eine Abführleitung 55 abgezogen. In die Abführleitung 55 ist eine weitere als Luftkühler ausgebildete Kühleinheit 57 geschaltet, die der Kühlung des Gasaustrittsstroms dient. Dieser Luftkühler 57 wird ebenfalls mit Wasser, welches in der Aufbereitungseinheit 9 gereinigt wurde, gekühlt. Die hierzu benötigte Wassermenge wird dem Vorratstank 29 entnommen und zur Sprühkühlung des Luftkühlers 55 genutzt. Auch hier ist die Nutzung durch eine unterbrochene Linie 59 angedeutet. Die unterbrochene Linie 59 kann insbesondere eine Anschlussleitung für Wasser oder eine Transportverbindung für Wasser sein. Der gekühlte Gasaustrittsstrom wird schließlich, beispielsweise zur Speicherung und/oder zu einer möglichen weiteren Nutzung des Kohlendioxids einer entsprechenden Verwertungseinrichtung 60 zugeführt.

Das von Kohlendioxid befreite Waschmedium sammelt sich am Boden 61 des Desorbers 5 und wird einem für das Lean-Solvent-Flash-Verfahren ausgebildeten Druckbehälter 63 zugeführt. Hierzu ist der Desorber 5 über eine Abführleitung 65 mit dem Druckbehälter 63 verbunden. Innerhalb des Druckbehälters 63 wird das Waschmedium unter Ausbildung einer Gasphase und einer Flüssigphase entspannt. Das Gas wird über eine Abführleitung 67 des Druckbehälters 63 dem Desorber 5 zugeführt. Durch eine anschließende Kondensation des dampfförmigen Waschmediums im Desorber 5 kann zur Desorption des Kohlendioxids aus dem Waschmedium benötigte Wärme gewonnen werden.

Zusätzlich ist dem Desorber 5 ein Reboiler 69 angeschlossen, der als Sumpfverdampfer ebenfalls einen Teil der Regenerationswärme für die Freisetzung des im Waschmedium absorbierten Kohlendioxids liefert.

Die Flüssigphase des Waschmediums wird von dem Druckbehälter 63 ausgehend in den Absorber 3 zurückgeführt, wozu eine Abführleitung 71 des Druckbehälters 63 mit einer Zuführleitung 73 des Absorbers 3 verbunden ist. Bei der Rückführung passiert das regenerierte Waschmedium ebenfalls den Wärmetauscher 53 und kühlt dabei durch Abgabe von Wärme an das beladene Waschmedium aus dem Absorber 3 ab.

Um sicherzustellen, dass das Waschmedium vor dem Eintritt in den Absorber 3 die für die Absorption von Kohlendioxid aus dem Rauchgas benötigten tiefen Temperaturen aufweist, ist in die Zuführleitung 73 zum Absorber 3 eine weitere Kühleinheit 75 geschaltet, mittels derer das Waschmedium vor dem Eintritt in den Absorber 5 weiter abgekühlt wird. Auch diese Kühleinheit 75 ist als Luftkühler ausgebildet und wird mit aus dem Vorratstank 29 entnommenem Wasser durch eine Sprühkühlung gekühlt, was durch die unterbrochene Linie 77 deutlich gemacht ist. Die unterbrochene Linie 77 kann insbesondere eine Anschlussleitung für Wasser oder eine Transportverbindung sein.

Zusätzlich ist eine Reclaiming-Vorrichtung 79 umfasst, die zur weiteren Aufbereitung des Waschmediums - insbesondere durch Entfernung von Stickoxiden (NOₓ) und Schwefeloxiden (SOₓ) - einen Teil des Waschmediums aus der Zuführleitung 73 abzieht und dieses entsprechend aufbereitet. Das Waschmedium wird dann nach erfolgter Reinigung und Aufbereitung dem Absorber 3 zugeführt und kann dort erneut zur Absorption von Kohlendioxid aus einem Rauchgas genutzt werden.

Die Kühlung der Kühleinheiten 19, 57, 75 mittels Wasser aus dem Vorratstank 29 ist grundsätzlich optional. Es ist somit möglich, eine, mehrere oder, wie vorliegend beschrieben, alle Kühleinheiten 19, 57, 75 mit dem im Vorratstank 29 gespeicherten Wasser zu kühlen. Weiter ist es ebenfalls möglich, anstatt der Luftkühler 19, 57, 75 wassergekühlte Kühleinheiten einzusetzen. Bei wassergekühlten Kühleinheiten können beispielsweise Wärmetauscher eingesetzt werden, die als Kühlmittel das in der Aufbereitungseinheit 9 gereinigte Wasser in einem entsprechenden Kühlmittelkreislauf einsetzen. Die Kühleinheiten können unmittelbar über eine Wasserleitung mit der Aufbereitungseinheit 9 verbunden sein. Das aufbereitete Wasser kann alternativ auch durch Verfrachtung zu den Kühleinheiten transportiert werden.

## Patentansprüche

1. Abscheidevorrichtung (1) für Kohlendioxid aus einem Gasstrom, insbesondere aus einem Rauchgasstrom, umfassend einen Absorber (3) zur Abtrennung von Kohlendioxid aus dem Gasstrom mittels eines Waschmediums, einen mit dem Absorber (3) strömungstechnisch verbundenen Desorber (5) zur Freisetzung des absorbierten Kohlendioxids aus dem Waschmedium, einen dem Absorber (3) strömungstechnisch vorgeschalteten Gas-kühler (7) zur Kühlung des Gasstromes, sowie eine dem Gaskühler (7) nachgeschaltete Aufbereitungseinheit (9), die zur Reinigung von Wasser aus dem Gaskühler (7) eingerichtet und ausgebildet ist, **dadurch gekennzeichnet, dass** die Aufbereitungseinheit (9) zur Abgabe von gereinigtem Wasser an den Gaskühler (7) ausgebildet ist.

2. Abscheidevorrichtung (1) nach Anspruch 1, wobei die Aufbereitungseinheit (9) über eine Zuführleitung (25) strömungstechnisch mit dem Gaskühler (7) verbunden ist.

3. Abscheidevorrichtung (1) nach Anspruch 2, wobei der Gas-kühler (7) in einen Kühlmittelkreislauf (13) geschaltet ist, der über die Zuführleitung (25) strömungstechnisch mit der Aufbereitungseinheit (9) verbunden ist.

4. Abscheidevorrichtung (1) nach einem der vorhergehenden Ansprüche, wobei die Aufbereitungseinheit (9) eine Umkehrosmoseanlage (27) umfasst.

5. Abscheidevorrichtung (1) nach einem der vorhergehenden Ansprüche, wobei die Aufbereitungseinheit (9) einen Vorratstank (29) umfasst.

6. Abscheidevorrichtung (1) nach einem der Ansprüche 3 bis 5, wobei die Aufbereitungseinheit (9) zur Abgabe von gereinigtem Wasser an den Kühlmittelkreislauf (13) des Gaskühlers (7) ausgebildet ist.

7. Abscheidevorrichtung (1) nach einem der vorhergehenden Ansprüche, wobei als Gaskühler (7) ein Direktkontakt-Kühler eingesetzt ist.

8. Abscheidevorrichtung (1) nach einem der vorhergehenden Ansprüche, wobei der Absorber (3) über eine Abführleitung (35) strömungstechnisch mit einer Zuführleitung (43, 51) des Desorbers (5) verbunden ist.

9. Abscheidevorrichtung (1) nach einem der vorhergehenden Ansprüche, wobei eine Abführleitung (71) aus dem Desorber (5) strömungstechnisch mit einer Zuführleitung (73) des Absorbers (3) verbunden ist.

10. Abscheidevorrichtung (1) nach Anspruch 9, wobei in die Zuführleitung (73) des Absorbers eine strömungstechnisch mit der Aufbereitungseinheit (9) verbundene Kühleinheit (75) zur Kühlung des dem Absorber (3) zugeführten Waschmediums geschaltet ist.

11. Abscheidevorrichtung (1) nach einem der vorhergehenden Ansprüche, wobei der Desorber (5) eine Abführleitung (55) für einen Gasaustrittsstrom umfasst, in die eine strömungstechnisch mit der Aufbereitungseinheit (9) verbundene Kühleinheit (57) geschaltet ist.

12. Verfahren zur Abscheidung von Kohlendioxid aus einem Gasstrom, insbesondere aus einem Rauchgasstrom,
- wobei ein Gasstrom einem Gaskühler (7) zugeführt wird,
- wobei der Gasstrom innerhalb des Gaskühlers (7) unter Kondensation von Wasser abgekühlt wird,
- wobei Wasser aus dem Gaskühler (7) entnommen wird, wobei zumindest ein Teilstrom (25) des Wassers aus dem Gaskühler (7) einer Aufbereitungseinheit (9) zugeführt wird, in welcher das Wasser für eine weitere Verwendung gereinigt wird, und
- wobei der abgekühlte Gasstrom einem Absorber (3) einer Abscheidevorrichtung (1) zugeführt wird, in dem im Gasstrom enthaltenes Kohlendioxid mittels eines Waschmediums aus dem Gasstrom abgetrennt wird,
**dadurch gekennzeichnet, dass**
das in der Aufbereitungseinheit (9) gereinigte Wasser dem Gaskühler (7) zugeführt wird.

13. Verfahren (1) nach Anspruch 12, wobei der Teilstrom (25) aus einem Kühlmittelkreislauf (13) des Gaskühlers (7) entnommen wird.

14. Verfahren nach Anspruch 12 oder 13, wobei die Reinigung des Wassers in der Aufbereitungseinheit (9) mittels einer Umkehrosmose erfolgt.

15. Verfahren nach einem der Ansprüche 12 bis 14, wobei das in der Aufbereitungseinheit (9) gereinigte Wasser einem Vorratstank (29) zugeführt wird.

16. Verfahren nach einem der Ansprüche 12 bis 15, wobei das in der Aufbereitungseinheit (9) gereinigte Wasser dem Kühlmittelkreislauf (13) zugeführt wird.

17. Verfahren nach einem der Ansprüche 12 bis 16, wobei als Gaskühler (7) ein Direktkontakt-Kühler eingesetzt wird.

18. Verfahren nach einem der Ansprüche 12 bis 17, wobei das mit Kohlendioxid beladene Waschmedium vom Absorber (3) einem Desorber (5) der Abscheidevorrichtung (1) zugeführt wird, in dem das absorbierte Kohlendioxid aus dem Waschmedium freigesetzt wird.

19. Verfahren nach einem der Ansprüche 12 bis 18, wobei das in der Aufbereitungseinheit (9) gereinigte Wasser zur Kühlung des dem Absorber (3) zugeführten Waschmediums genutzt wird.

20. Verfahren nach Anspruch 18 oder 19, wobei das in der Aufbereitungseinheit (9) gereinigte Wasser zur Kühlung des im Desorber (5) freigesetzten Kohlendioxids genutzt wird.

## Claims

1. Removal apparatus (1) for carbon dioxide from a gas stream, in particular from a flue gas stream, which comprises an absorber (3) for separating carbon dioxide from the gas stream by means of a scrubbing medium, a desorber (5) which is connected hydrodynamically to the absorber (3) for liberating the absorbed carbon dioxide from the scrubbing medium, a gas cooler (7) which is located hydrodynamically upstream of the absorber (3) for cooling the gas stream, and also a treatment unit (9) which is located downstream of the gas cooler (7) and is equipped and configured for purifying water from the gas cooler (7), **characterized in that** the treatment unit (9) is configured for feeding purified water to the gas cooler (7).

2. Removal apparatus (1) according to Claim 1, wherein the treatment unit (9) is connected hydrodynamically via a feed line (25) to the gas cooler (7).

3. Removal apparatus (1) according to Claim 2, wherein the gas cooler (7) is installed in a coolant circuit (13) which is connected hydrodynamically via the feed line (25) to the treatment unit (9).

4. Removal apparatus (1) according to any of the preceding claims, wherein the treatment unit (9) comprises a reverse osmosis plant (27).

5. Removal apparatus (1) according to any of the preceding claims, wherein the treatment unit (9) comprises a stock tank (29).

6. Removal apparatus (1) according to any of Claims 3 to 5, wherein the treatment unit (9) is configured for feeding purified water to the coolant circuit (13) of the gas cooler (7).

7. Removal apparatus (1) according to any of the preceding claims, wherein a direct contact cooler is used as gas cooler (7).

8. Removal apparatus (1) according to any of the preceding claims, wherein the absorber (3) is connected hydrodynamically via a discharge line (35) to a feed line (43, 51) of the desorber (5).

9. Removal apparatus (1) according to any of the preceding claims, wherein a discharge line (71) from the desorber (5) is connected hydrodynamically to a feed line (73) of the absorber (3).

10. Removal apparatus (1) according to Claim 9, wherein a cooling unit (75) for cooling the scrubbing medium fed to the absorber (3) and connected hydrodynamically to the treatment unit (9) is installed in the feed line (73) of the absorber.

11. Removal apparatus (1) according to any of the preceding claims, wherein the desorber (5) comprises a discharge line (55) for a gas outlet stream in which a cooling unit (57) connected hydrodynamically to the treatment unit (9) is installed.

12. Process for removing carbon dioxide from a gas stream, in particular from a flue gas stream,
- wherein a gas stream is fed to a gas cooler (7),
- wherein the gas stream is cooled within the gas cooler (7) with condensation of water,
- wherein water is taken from the gas cooler (7), wherein at least a substream (25) of the water from the gas cooler (7) is fed to a treatment unit (9) in which the water is purified for a further use, and
- wherein the cooled gas stream is fed to an absorber (3) of a removal apparatus (1) in which carbon dioxide present in the gas stream is separated from the gas stream by means of a scrubbing medium,
**characterized in that** the water which has been purified in the treatment unit (9) is fed to the gas cooler (7).

13. Process (1) according to Claim 12, wherein the substream (25) is taken from a coolant circuit (13) of the gas cooler (7).

14. Process according to Claim 12 or 13, wherein the purification of the water in the treatment unit (9) is effected by means of reverse osmosis.

15. Process according to any of Claims 12 to 14, wherein the water which has been purified in the treatment unit (9) is fed to a stock tank (29).

16. Process according to any of Claims 12 to 15, wherein the water which has been purified in the treatment unit (9) is fed to the coolant circuit (13).

17. Process according to any of Claims 12 to 16, wherein a direct contact cooler is used as gas cooler (7).

18. Process according to any of Claims 12 to 17, wherein the scrubbing medium loaded with carbon dioxide from the absorber (3) is fed to a desorber (5) of the removal apparatus (1) in which the absorbed carbon dioxide is liberated from the scrubbing medium.

19. Process according to any of Claims 12 to 18, wherein the water which has been purified in the treatment unit (9) is utilized for cooling the scrubbing medium fed to the absorber (3).

20. Process according to Claim 18 or 19, wherein the water which has been purified in the treatment unit (9) is utilized for cooling the carbon dioxide liberated in the desorber (5).

## Revendications

1. Installation (1) de séparation du dioxyde de carbone d'un courant gazeux, notamment d'un courant de gaz de fumée, comprenant un absorbeur (3) de séparation du dioxyde de carbone du courant gazeux au moyen d'un milieu de lavage, un désorbeur (5) communiquant en technique des fluides avec l'absorbeur (3) pour dégager du dioxyde de carbone absorbé du milieu de lavage, un refroidisseur (7) de gaz en amont en technique des fluides de l'absorbeur (3) pour refroidir le courant de gaz, ainsi qu'une unité (9) de traitement en aval du refroidisseur (7) de gaz, qui est conçue et constituée pour épurer de l'eau sortant du refroidisseur (7) de gaz, **caractérisée en ce que** l'unité (9) de traitement est constituée pour céder de l'eau épurée au refroidisseur (7) de gaz.

2. Installation (1) de séparation suivant la revendication 1, dans laquelle l'unité (9) de traitement communique avec le refroidisseur (7) de gaz en technique des fluides par l'intermédiaire d'un conduit (25) d'apport.

3. Installation (1) de séparation suivant la revendication 2, dans laquelle le refroidisseur (7) de gaz est monté dans un circuit (13) de fluide de refroidissement, qui communique avec l'unité (9) de traitement en technique des fluides par l'intermédiaire du conduit (25) d'apport.

4. Installation (1) de séparation suivant l'une des revendications précédentes, dans laquelle l'unité (9) de traitement comprend une installation (27) d'osmose inverse.

5. Installation (1) de séparation suivant l'une des revendications précédentes, dans laquelle l'unité (9) de traitement comprend un réservoir (29).

6. Installation (1) de séparation suivant l'une des revendications 3 à 5, dans laquelle l'unité (9) de traitement est constituée pour céder de l'eau épurée au circuit (13) de fluide de refroidissement du refroidisseur (7) de gaz.

7. Installation (1) de séparation suivant l'une des revendications précédentes, dans laquelle un refroidisseur à contact direct est utilisé comme refroidisseur (7) de gaz.

8. Installation (1) de séparation suivant l'une des revendications précédentes, dans laquelle l'absorbeur communique avec un conduit (43, 51) d'apport du désorbeur (5) en technique des fluides par l'intermédiaire d'un conduit (35) d'évacuation.

9. Installation (1) de séparation suivant l'une des revendications précédentes, dans laquelle un conduit (71) d'évacuation sortant du désorbeur (5) communique en technique des fluides avec un conduit (73) d'apport de l'absorbeur (3).

10. Installation (1) de séparation suivant la revendication 9, dans laquelle, dans le conduit (73) d'apport de l'absorbeur, une unité (75) de refroidissement, communiquant en technique des fluides avec l'unité (9) de traitement, est montée pour le refroidissement du milieu de lavage apporté à l'absorbeur (3).

11. Installation (1) de séparation suivant l'une des revendications précédentes, dans laquelle le désorbeur (5) comprend un conduit (55) d'évacuation d'un courant gazeux de sortie, conduit dans lequel est montée une unité (57) de refroidissement communiquant en technique des fluides avec l'unité (9) de traitement.

12. Procédé de séparation du dioxyde de carbone d'un courant gazeux, notamment d'un courant de gaz de fumée,
- dans lequel on envoie un courant gazeux à un refroidisseur (7) de gaz,
- dans lequel on refroidit le courant gazeux dans le refroidisseur (7) de gaz avec condensation d'eau,
- dans lequel on prélève de l'eau du refroidisseur (7) de gaz, au moins un courant (25) partiel de l'eau étant envoyé du refroidisseur (7) de gaz à une unité (9) de traitement, dans laquelle l'eau est épurée en vue d'une autre utilisation et
- dans lequel on envoie le courant gazeux refroidi à un absorbeur (3) d'une installation (1) de séparation, absorbeur dans lequel du dioxyde de carbone contenu dans le courant gazeux est séparé du courant gazeux au moyen d'un milieu de lavage,
**caractérisé en ce que**
l'on envoie au refroidisseur (7) de gaz l'eau épurée dans l'unité (9) de traitement.

13. Procédé suivant la revendication 12, dans lequel on prélève le courant (25) partiel d'un circuit (13) de fluide de refroidissement du refroidisseur (7) de gaz.

14. Procédé suivant la revendication 12 ou 13, dans lequel on effectue l'épuration de l'eau dans l'unité (9) de traitement au moyen d'un osmose inverse.

15. Procédé suivant l'une des revendications 12 à 14, dans lequel on envoie à un réservoir (29) l'eau épurée dans l'unité (9) de traitement.

16. Procédé suivant l'une des revendications 12 à 15, dans lequel on envoie au circuit (13) de fluide de refroidissement l'eau épurée dans l'unité (9) de traitement.

17. Procédé suivant l'une des revendications 12 à 16, dans lequel on utilise un refroidisseur à contact direct comme refroidisseur (7) de gaz.

18. Procédé suivant l'une des revendications 12 à 17, dans lequel on envoie le milieu de lavage chargé de dioxyde de carbone de l'absorbeur (3) à un désorbeur (5) de l'installation (1) de séparation, désorbeur dans lequel le dioxyde de carbone absorbé se dégage du milieu de lavage.

19. Procédé suivant l'une des revendications 12 à 18, dans lequel on utilise l'eau épurée dans l'unité (9) de traitement pour refroidir le milieu de lavage envoyé à l'absorbeur (3).

20. Procédé suivant la revendication 18 ou 19, dans lequel on utilise l'eau épurée dans l'unité (9) de traitement pour refroidir le dioxyde de carbone dégagé dans le désorbeur (5).
